# EUROPÄISCHE PATENTANMELDUNG

(11) **EP 1 990 241 A2**
(43) Veröffentlichungstag der Anmeldung: **12.11.2008**
(21) Anmeldenummer: 08006184.9
(22) Anmeldetag: 28.03.2008
(51) Int. Cl.: B60R 7/00

(54) **Vorrichtung zur Anbringung eines elastischen Haltenetzes an einem mit einer Wandverkleidung versehenen Wandungsabschnitt eines Kraftfahrzeugs**

(30) Priorität: 07.05.2007 DE 202007006680 U
(71) Anmelder: Nölle-Pepin GmbH & Betriebs KG, 58332 Schwelm (DE)
(72) Erfinder: Nölle, Hans-Erich, 58332 Schwelm (DE)
(74) Vertreter: Lelgemann, Karl-Heinz

(57) **Zusammenfassung**

Eine Vorrichtung zur Anbringung eines elastischen Haltenetzes an einem mit einer Wandverkleidung versehenen Wandungsabschnitt eines Kraftfahrzeugs, z.B. an einem Kardantunnel, hat mehrere Befestigungsmittel (1), von denen jedes einerseits mit einem Rand bzw. Randgurt des Haltenetzes und andererseits mit dem Wandungsabschnitt verbindbar ist.

Zur einfacheren Montierbarkeit am Wandungsabschnitt und zur stets korrekten Positionierung des Haltenetzes wird vorgeschlagen, daß jedes Befestigungsmittel (1) ein wandungsabschnittseitiges Verankerungsteil (3) und ein mit diesem verbindbares haltenetzseitiges Fixierteil (4) aufweist, und daß die Fixierteile (4) im am Haltenetz angebrachten Zustand mit den ihnen zugeordneten, am Wandungsabschnitt befestigten Verankerungsteilen (3) in Eingriff bringbar sind.

## Beschreibung

Die Erfindung bezieht sich auf eine Vorrichtung zur Anbringung eines elastischen Haltenetzes an einem mit einer Wandverkleidung versehenen Wandungsabschnitt eines Kraftfahrzeugs, z.B. an einem Kardantunnel, mit mehreren Befestigungsmitteln, von denen jedes einerseits mit einem Rand bzw. Randgurt des Haltenetzes und andererseits mit dem Wandungsabschnitt verbindbar ist.

Bei bekannten derartigen Vorrichtungen wird der Rand bzw. Randgurt des Haltenetzes in Eingriff mit bereits am Wandungsabschnitt fixierten Befestigungsmitteln verbracht. Hierbei wird der Rand in Aufnahmen der bereits an dem Wandungsabschnitt fixierten Befestigungsmittel eingeführt. Üblicherweise bleibt der Rand bzw. Randgurt des Haltenetzes dann in Richtung seiner Haupterstreckung beweglich, so daß sich nach vergleichsweise kurzer Gebrauchszeit des Haltenetzes dessen optischer Eindruck verschlechtert. Darüber hinaus ist die Funktion des Haltenetzes nicht vollständig gewährleistet, wenn unterschiedliche Randbereiche des Haltenetzes auch im unbeladenen Zustand unterschiedlichen Beanspruchungen unterworfen sind.

Der vorliegenden Erfindung liegt die Aufgabe zugrunde, eine Vorrichtung zur Anbringung eines elastischen Haltenetzes an einem mit einer Wandverkleidung versehenen Wandungsabschnitt eines Kraftfahrzeugs zu schaffen, mittels der das Haltenetz in einfacher Weise am Wandungsabschnitt montierbar ist und die darüber hinaus eine stets korrekte Positionierung des Haltenetzes, insbesondere dessen Rands bzw. Randgurts, erlaubt.

Diese Aufgabe wird erfindungsgemäß dadurch gelöst, daß jedes Befestigungsmittel der Vorrichtung ein wandungsabschnittseitiges Verankerungsteil und ein mit diesem verbindbares haltenetzseitiges Fixierteil aufweist, und daß die Fixierteile im am Haltenetz angebrachten Zustand mit den ihnen zugeordneten, am Wandungsabschnitt befestigten Verankerungsteilen in Eingriff bringbar sind.

Durch die Herstellung des Eingriffs zwischen den Fixierteilen einerseits und den Verankerungsteilen andererseits wird im Zusammenwirken mit den an den Fixierteilen befestigten Abschnitten des Randes bzw. Randgurts des Haltenetzes gewährleistet, daß das Haltenetz in der Anordnung verbleibt, in der es an den Verankerungsteilen angebracht wird. Auch nach einer vergleichsweise langen Nutzungsdauer kommt es nicht dazu, daß der Rand bzw. der Randgurt des Haltenetzes in bezug auf die Verankerungsteile verrutscht.

Um im Falle eines Defekts des Haltenetzes dieses mit einem geringen Aufwand ersetzen zu können, ist es vorteilhaft, wenn die Verankerungs- und die Fixierteile der Befestigungsmittel in lösbaren Eingriff bringbar sind.

Eine mit einem geringen technisch konstruktiven und MontageAufwand einhergehende Weiterbildung der Erfindung wird erzielt, wenn das Verankerungsteil jedes Befestigungsmittels einen im wesentlichen zylindrischen Abschnitt aufweist, an dessen Stirnenden jeweils ein Kragen angeordnet ist, deren einer durch eine Durchbrechung der Wandverkleidung zwischen diese und den Wandungsabschnitt einführbar ist, wobei der Abstand zwischen den einander zugewandten Flächen der Kragen etwa der Dicke der Wandverkleidung entspricht. Das Verankerungsteil kann dann mit geringem Aufwand an der Wandverkleidung fixiert werden.

Eine noch bessere Befestigung des Verankerungsteils kann erzielt werden, wenn der zwischen Wandverkleidung und Wandungsabschnitt angeordnete Kragen jedes Verankerungsteils einen von dessen dem im wesentlichen zylindrischen Abschnitt abgewandten Außenseite nach außen bzw. unten vorstehenden Klemmvorsprung aufweist. Mittels des Klemmvorsprungs kann eine besonders gute Befestigung des unteren Kragens zwischen der Wandverkleidung einerseits und dem Wandungsabschnitt andererseits bewerkstelligt werden.

Um in einfacher Weise den Eingriff zwischen Verankerungsteil einerseits und Fixierteil andererseits realisieren zu können, ist es vorteilhaft, wenn der andere Kragen jedes Verankerungsteils auf seiner Außenumfangsfläche eine Eingriffsnut bzw. einen Eingriffsvorsprung aufweist, die bzw. der mit einem Eingriffsvorsprung bzw. einer Eingriffsnut des Fixierteils in und außer Eingriff bringbar ist. Im Zusammenwirken mit der Elastizität des Haltenetzes kann dann das am Haltenetz befestigte Fixierteil in eine Position verbracht werden, aus der heraus in einfacher Weise der Eingriff zwischen fixierteilseitigem Eingriffsvorsprung bzw. Eingriffsnut und verankerungsteilseitiger Eingriffsnut bzw. Eingriffsvorsprung hergestellt werden kann.

Vorteilhaft ist der andere Kragen halbovalförmig ausgebildet, wobei seine Eingriffsnut bzw. sein Eingriffsvorsprung sich längs seiner gekrümmten Außenumfangsfläche erstreckt.

Um in flexibler Weise und mit einem geringen Aufwand die Befestigung des Fixierteils am Haltenetz realisieren zu können, ist es vorteilhaft, wenn das Fixierteil jedes Befestigungsmittels eine Grundplatte, die an ihrer Unterseite den Eingriffsvorsprung bzw. die Eingriffsnut des Fixierteils aufweist, und eine Abdeckplatte aufweist, die unter Einklemmung eines Randabschnitts des Haltenetzes mit der Grundplatte verrastbar ist. Mit einfachen Handgriffen läßt sich dann das Fixierteil des Befestigungsmittels in definierter und fester Position am Rand bzw. Randgurt des Haltenetzes anbringen.

Die korrekte räumliche Positionierung des Fixierteils am Rand bzw. Randgurt des Haltenetzes wird weiter erleichtert, wenn auf der dem Eingriffsvorsprung bzw. der Eingriffsnut abgewandten Oberseite der Grundplatte des Fixierteils zwei äußere Randvorsprünge und ein innerer Einzelvorsprung ausgebildet sind, wobei zwischen dem Einzelvorsprung und den beiden Randvorsprüngen ein Randgurt des Haltenetzes einpaßbar ist.

Vorteilhaft kann das Fixierteil des Befestigungsmittels so ausgebildet sein, daß die äußeren Randvorsprünge einen rechten Winkel bilden, wobei zwischen dem Einzelvorsprung und den beiden Randvorsprüngen eine Ecke des Randgurts des Haltenetzes einpaßbar ist. Entsprechend ausgebildete Befestigungsmittel können dann zur Fixierung der Ecken des Haltenetzes eingesetzt werden.

Zur einfachen und zuverlässigen Verrastung zwischen Abdeckplatte und Grundplatte des Fixierteils ist es vorteilhaft, wenn die Abdeckplatte jedes Fixierteils einen dem inneren Einzelvorsprung der Grundplatte zugeordneten inneren Rastvorsprung, eine den äußeren Randvorsprüngen der Grundplatte zugeordnete äußere Rastwandung und eine von der Rastwandung einwärts vorstehende Rastnase aufweist, die zwischen den beiden äußeren Randvorsprüngen der Grundplatte einrastbar ist.

Um den Rand bzw. den Randgurt des Haltenetzes noch besser in bezug auf das Fixierteil räumlich zu fixieren, ist es vorteilhaft, wenn auf der dem Randgurt des Haltenetzes zugewandten Unterseite der Abdeckplatte und/oder der dem Randgurt des Haltenetzes zugewandten Oberseite der Grundplatte Fixiervorsprünge ausgebildet sind, die beim Einrasten von Abdeck- und Grundplatte in den Randgurt eindringen.

Vorteilhaft weist die erfindungsgemäße Befestigungsvorrichtung für jede Ecke des Haltenetzes ein Befestigungsmittel und zumindest für die Unterseite des Haltenetzes zumindest ein weiteres Befestigungsmittel auf, das zwischen den beiden Ecken an der Unterseite bzw. dem unteren Rand des Haltenetzes angeordnet ist.

Die erfindungsgemäße Befestigungsvorrichtung eignet sich insbesondere für Haltenetze, bei denen sowohl das Netzteil als auch der Rand bzw. Randgurt elastisch ausgebildet sind.

Im folgenden wird die Erfindung anhand von Ausführungsformen unter Bezugnahme auf die Zeichnungen näher erläutert. Es zeigen:
- Figur 1: eine perspektivische Darstellung einer ersten Ausführungsform eines Befestigungsmittels der erfindungsgemäßen Vorrichtung zur Anbringung eines elastischen Haltenetzes;
- Figur 2: eine perspektivische Darstellung eines Verankerungsteils des in Figur 1 gezeigten Befestigungsmittels;
- Figuren 3 und 4: unterschiedliche perspektivische Explosionsdarstellungen des in Figur 1 gezeigten Ausführungsbeispiels des erfindungsgemäßen Befestigungsmittels; und
- Figuren 5 und 6: unterschiedliche perspektivische Explosionsdarstellungen einer weiteren Ausführungsform des erfindungsgemäßen Befestigungsmittels.

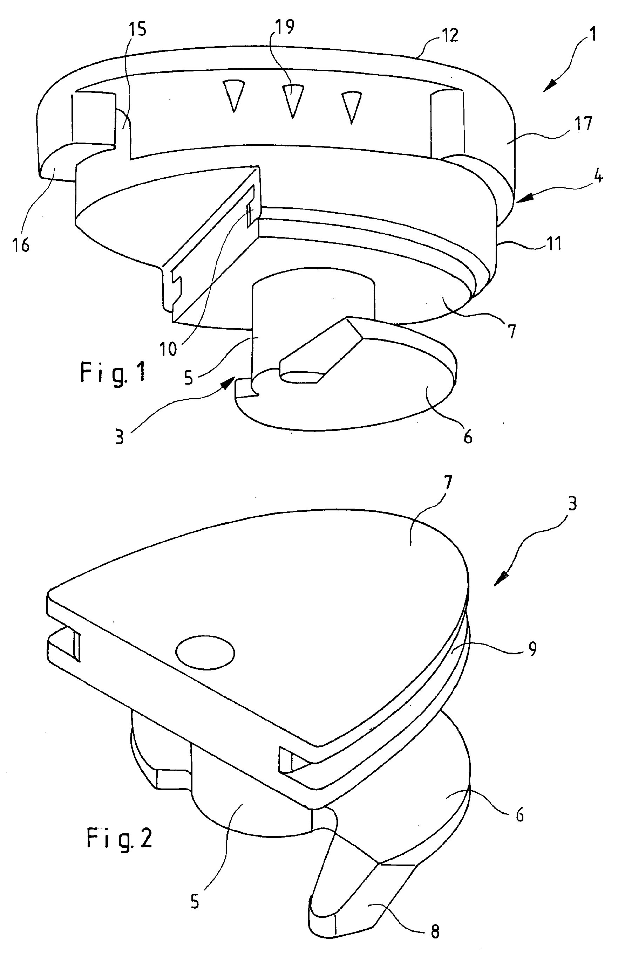

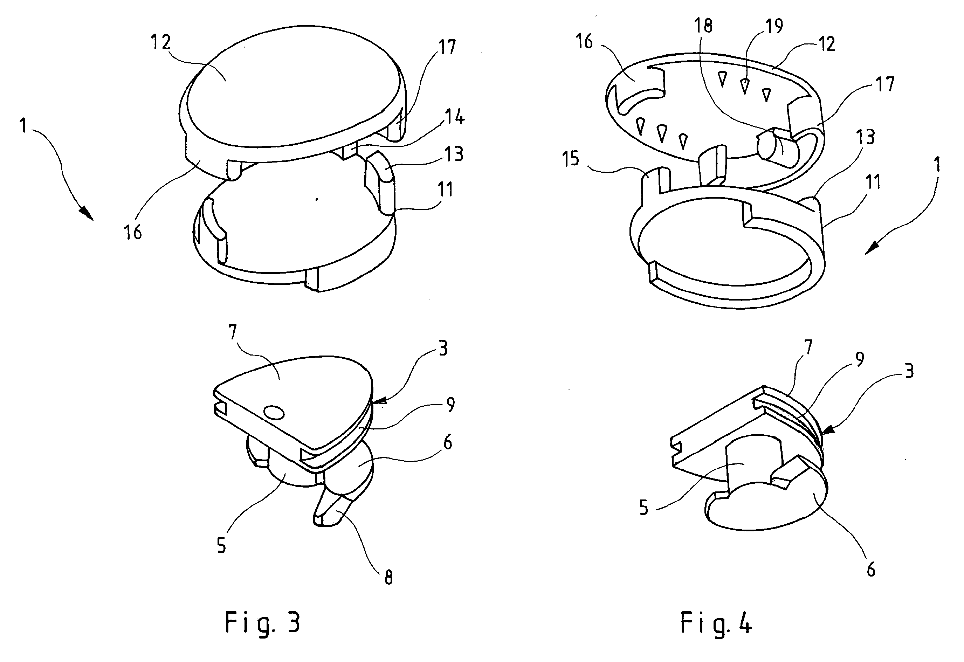

Eine erfindungsgemäße Vorrichtung zur Anbringung eines in den Figuren nicht gezeigten elastischen Haltenetzes an einem in den Figuren ebenfalls nicht gezeigten, mit einer Wandverkleidung versehenen Wandungsabschnitt eines Kraftfahrzeugs, insbesondere an einem Kardantunnel, hat mehrere Befestigungsmittel 1 bzw. 2, wie sie in den Figuren 1, 3 und 4 bzw. 5 und 6 gezeigt sind.

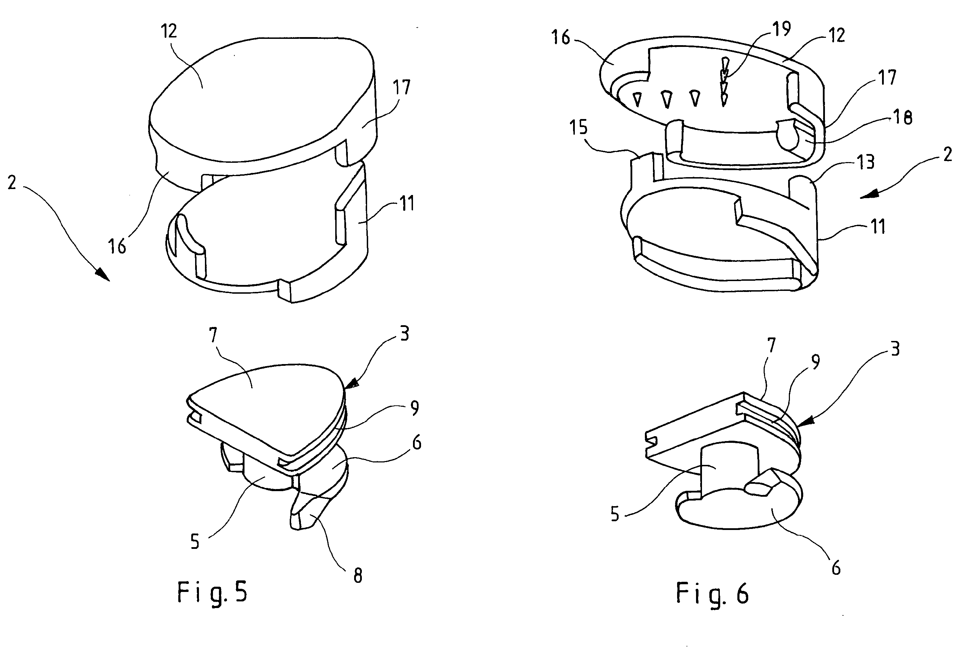

Sofern das Haltenetz an einem Kardantunnel eines Kraftfahrzeugs angebracht wird, hat das Haltenetz etwa eine rechteckige Form mit vier Ecken. Zur Anbringung dieses Haltenetzes am Kardantunnel sind bei einer Ausführungsform der erfindungsgemäßen Befestigungsvorrichtung je Ecke des Haltenetzes ein in den Figuren 5 und 6 gezeigtes Befestigungsmittel 2 und etwa mittig am unteren Längsrand des Haltenetzes ein Befestigungsmittel 1 vorgesehen.

Die in Figur 1 gezeigte Ausführungsform des Befestigungsmittels hat ein wandungsabschnittseitiges Verankerungsteil 3 und ein haltenetzseitiges Fixierteil 4.

Das wandungsabschnittseitige Verankerungsteil 3 gliedert sich in einen im wesentlichen zylindrischen Abschnitt 5 und zwei an den beiden Stirnenden des zylindrischen Abschnitts 5 angeordneten, den zylindrischen Abschnitt 5 radial überragenden Kragen 6, 7. Es sei darauf hingewiesen, daß das Verankerungsteil 3 bei den beiden in den Figuren 1, 3 und 4 bzw. 5 und 6 gezeigten Befestigungsmitteln 1 bzw. 2 gleich ausgebildet ist.

Der in den Figuren untere Kragen 6 des Verankerungsteils 3 wird durch eine in einer Wandverkleidung des Wandungsabschnitts vorgesehene Durchbrechung zwischen die Wandverkleidung und den Wandungsabschnitt eingefügt. Um das Verankerungsteil 3 dort zu befestigen bzw. zu fixieren, weist der in den Figuren untere Kragen 6 einen Klemmvorsprung 8 auf, der von der in den Figuren 1 und 2 unteren Außenfläche des unteren Kragens 6 in abwärtiger Richtung vorsteht.

Der Abstand zwischen der oberen Außenfläche des Kragens 6 und der unteren Außenfläche des oberen Kragens 7 des Verankerungsteils 3 entspricht in etwa der Dicke der Wandverkleidung, so daß durch das Zusammenwirken zwischen den beiden Kragen 6, 7, dem Klemmvorsprung 8, der Wandverkleidung und dem Wandungsabschnitt eine zuverlässige Fixierung des Verankerungsteils 3 gewährleistet ist.

Der obere Kragen 7 hat bei dem in den Figuren dargestellten Ausführungsbeispiel der Befestigungsmittel 1, 2 eine etwa halbovalförmige Gestalt, wobei er auf seiner gekrümmten Außenumfangsfläche eine Eingriffsnut 9 aufweist.

Der Eingriffsnut 9 des oberen Kragens 7 des Verankerungsteils 3 zugeordnet ist ein Eingriffsvorsprung 10 des Fixierteils 4. Dieser Eingriffsvorsprung 10 des Fixierteils 4 ist an der Unterseite einer Grundplatte 11 des Fixierteils 4 ausgestaltet, wobei das Fixierteil 4 noch eine Abdeckplatte 12 aufweist, die mit der Grundplatte 11 in Rasteingriff bringbar ist.

Wie sich am besten aus Figur 1 ergibt, kann das Fixierteil 4 durch Einschieben des Eingriffsvorsprungs 10 an der Unterseite der Grundplatte 11 mit der Eingriffsnut 9 des Verankerungsteils 3 in Eingriff gebracht werden. Bei der in Figur 1 gezeigten Ausführungsform ist der fixierteilseitige Eingriffsvorsprung 10 in vollem Eingriff mit der verankerungsteilseitigen Eingriffsnut 9. Hierdurch ist das Fixierteil 4 am Verankerungsteil 3 und damit am Wandungsabschnitt bzw. Kardantunnel räumlich fixiert.

Bevor die Anbringung des Fixierteils 4 am Verankerungsteil 3 erfolgt, wird das Fixierteil 4 im dargestellten Ausführungsbeispiel mit einem Randgurt des Haltenetzes verbunden.

Hierzu weist die Grundplatte 11 des Fixierteils 4 auf ihrer Oberseite zwei äußere Randvorsprünge 13, 14 und einen inneren Einzelvorsprung 15 auf. Der Abstand zwischen den äußeren Randvorsprüngen 13, 14 und dem inneren Einzelvorsprung 15 ist so gewählt, daß der Randgurt des Haltenetzes zwischen die Randvorsprünge 13, 14 einerseits und den Einzelvorsprung 15 andererseits eingefügt werden kann.

Zur Befestigung des Randgurts und damit des Haltenetzes am Fixierteil 4 wird dann dessen Abdeckplatte 12 mit der Grundplatte 11 verrastet. Hierzu weist die Abdeckplatte 12 einen inneren Rastvorsprung 16 und eine äußere Rastwandung 17 auf, wobei der innere Rastvorsprung 16 in Rastanlage gegen den inneren Einzelvorsprung 15 der Grundplatte 11 und die äußere Rastwandung 17 in Rastanlage gegen die äußeren Randvorsprünge 13, 14 der Grundplatte 11 gerät. Der innere Rastvorsprung 16 sowie die äußere Rastwandung 17 sind jeweils an der Außenseite der Randvorsprünge 13, 14 bzw. des Einzelvorsprungs 15 angeordnet.

Die äußere Rastwandung 17 der Abdeckplatte 12 hat auf ihrer Innenseite eine einwärts vorragende Rastnase 18, die in den Zwischenraum zwischen den beiden Randvorsprüngen 13, 14 der Grundplatte 11 einrastet.

Des weiteren sind bei der in den Figuren gezeigten Ausführungsform des Befestigungsmittels 1 bzw. 2 auf der Unterseite der Abdeckplatte 12 Fixiervorsprünge 19 vorgesehen, die beim Verrasten der Grundplatte 11 und der Abdeckplatte 12 in den Randgurt des Haltenetzes eindringen und diesen so besser räumlich am Fixierteil 4 befestigen.

Bei der in den Figuren 5 und 6 gezeigten Ausführungsform des Befestigungsmittels 2 sind die an der Grundplatte 11 des Fixierteils 4 vorgesehenen Randvorsprünge 13, 14 so orientiert, daß sie gemeinsam einen rechten Winkel bilden. Entsprechend ist die Rastwandung 17 der Abdeckplatte 12 gestaltet. Der Abstand zwischen den einen rechten Winkel bildenden Randvorsprüngen 13, 14 und dem inneren Einzelvorsprung 15 der Grundplatte 11 ist so gewählt, daß zwischen den äußeren Randvorsprüngen 13, 14 und dem inneren Einzelvorsprung 15 eine Ecke des Randgurts des Haltenetzes eingefügt werden kann. Durch die Verrastung der Abdeckplatte 12, die mit der hinsichtlich ihrer Form an die senkrecht zueinander verlaufenden Randvorsprünge 13, 14 der Grundplatte 11 angepaßten äußeren Rastwandung 17 versehen ist, an der Grundplatte 11 läßt sich die betreffende Ecke des Randgurts des Haltenetzes räumlich am Fixierteil 4 fixieren, wobei die räumliche Fixierung noch durch die an der Unterseite der Abdeckplatte 12 ausgebildeten Fixiervorsprünge 19 verstärkt wird.

Zur Anbringung des Haltenetzes am Wandungsabschnitt werden zunächst die Verankerungsteile 3 der Befestigungsmittel 1, 2 an den ihnen zugeordneten Durchbrechungen der Wandverkleidung fixiert. Die Fixierteile 4 werden an den für sie vorgesehenen Stellen mit dem Randgurt des Haltenetzes in Eingriff gebracht, wobei zumindest an den vier Ecken des Haltenetzes jeweils ein Befestigungsmittel 2 und an der Unterseite bzw. am unteren Rand des Haltenetzes ein weiteres Befestigungsmittel 1 zwischen den Ecken - etwa mittig - vorgesehen ist.

Dann wird das mit den Fixierteilen 4 versehene Haltenetz durch Herstellung des Eingriffs zwischen den Fixierteilen 4 und den ihnen zugeordneten Verankerungsteilen 3 am Wandungsabschnitt fixiert. Der Eingriff zwischen den Verankerungsteilen 3 einerseits und den Fixierteilen 4 andererseits ist in einfacher Weise herstellbar, da aufgrund der elastischen Ausgestaltung des Haltenetzes die Fixierteile 4 jeweils in die Positionen verbringbar sind, aus denen heraus der Eingriff zwischen dem fixierteilseitigen Eingriffsvorsprung 10 und der verankerungsteilseitigen Eingriffsnut 9 hergestellt werden kann.

## Patentansprüche

1. Vorrichtung zur Anbringung eines elastischen Haltenetzes an einem mit einer Wandverkleidung versehenen Wandungsabschnitt eines Kraftfahrzeugs, z.B. an einem Kardantunnel, mit mehreren Befestigungsmitteln (1, 2), von denen jedes einerseits mit einem Rand bzw. Randgurt des Haltenetzes und andererseits mit dem Wandungsabschnitt verbindbar ist, **dadurch gekennzeichnet, daß** jedes Befestigungsmittel (1, 2) ein wandungsabschnittseitiges Verankerungsteil (3) und ein mit diesem verbindbares haltenetzseitiges Fixierteil (4) aufweist, und daß die Fixierteile (4) im am Haltenetz angebrachten Zustand mit den ihnen zugeordneten, am Wandungsabschnitt befestigten Verankerungsteilen (3) in Eingriff bringbar sind.

2. Vorrichtung nach Anspruch 1, bei der die Verankerungs-(3) und die Fixierteile (4) der Befestigungsmittel (1, 2) in lösbaren Eingriff bringbar sind.

3. Vorrichtung nach Anspruch 1 oder 2, bei der das Verankerungsteil (3) jedes Befestigungsmittels (1, 2) einen im wesentlichen zylindrischen Abschnitt (5) aufweist, an dessen Stirnenden jeweils ein Kragen (6, 7) angeordnet ist, deren einer (6) durch eine Durchbrechung der Wandverkleidung zwischen diese und den Wandungsabschnitt einführbar ist, wobei der Abstand zwischen den einander zugewandten Flächen der Kragen (6, 7) etwa der Dicke der Wandverkleidung entspricht.

4. Vorrichtung nach Anspruch 3, bei der der zwischen Wandverkleidung und Wandungsabschnitt angeordnete Kragen (6) jedes Verankerungsteils (3) einen von dessen dem im wesentlichen zylindrischen Abschnitt (5) abgewandten Außenseite nach außen bzw. unten vorstehenden Klemmvorsprung (8) aufweist.

5. Vorrichtung nach Anspruch 3 oder 4, bei der der andere Kragen (7) jedes Verankerungsteils (3) auf seiner Außenumfangsfläche eine Eingriffsnut (9) bzw. einen Eingriffsvorsprung aufweist, die bzw. der mit einem Eingriffsvorsprung (10) bzw. einer Eingriffsnut des Fixierteils (4) in und außer Eingriff bringbar ist.

6. Vorrichtung nach Anspruch 5, bei der der andere Kragen (7) halbovalförmig ist und seine Eingriffsnut (9) bzw. seinen Eingriffsvorsprung auf seiner gekrümmten Außenumfangsfläche aufweist.

7. Vorrichtung nach Anspruch 5 oder 6, bei der das Fixierteil (4) jedes Befestigungsmittels (1, 2) eine Grundplatte (11), die an ihrer Unterseite den Eingriffsvorsprung (10) bzw. die Eingriffsnut des Fixierteils (4) aufweist, und eine Abdeckplatte (12) aufweist, die unter Einklemmung eines Randabschnitts des Haltenetzes mit der Grundplatte (11) verrastbar ist.

8. Vorrichtung nach Anspruch 7, bei der auf der dem Eingriffsvorsprung (10) bzw. der Eingriffsnut abgewandten Oberseite der Grundplatte (11) des Fixierteils (4) zwei äußere Randvorsprünge (13, 14) und ein innerer Einzelvorsprung (15) ausgebildet sind, wobei zwischen dem Einzelvorsprung (15) und den beiden Randvorsprüngen (13, 14) ein Randgurt des Haltenetzes einpaßbar ist.

9. Vorrichtung nach Anspruch 8, bei der die äußeren Randvorsprünge (13, 14) einen rechten Winkel bilden, wobei zwischen dem Einzelvorsprung (15) und den beiden Randvorsprüngen (13, 14) eine Ecke des Randgurts des Haltenetzes einpaßbar ist.

10. Vorrichtung nach Anspruch 8 oder 9, bei der die Abdeckplatte (12) jedes Fixierteils (4) einen dem inneren Einzelvorsprung (15) der Grundplatte (11) zugeordneten inneren Rastvorsprung (16), eine den äußeren Randvorsprüngen (13, 14) der Grundplatte (11) zugeordnete äußere Rastwandung (17) und eine von der Rastwandung (17) einwärts vorstehende Rastnase (18) aufweist, die zwischen den beiden äußeren Randvorsprüngen (13, 14) der Grundplatte (11) einrastbar ist.

11. Vorrichtung nach einem der Ansprüche 7 bis 10, bei der auf der dem Randgurt des Haltenetzes zugewandten Unterseite der Abdeckplatte (12) und/oder der dem Randgurt des Haltenetzes zugewandten Oberseite der Grundplatte (11) Fixiervorsprünge (19) ausgebildet sind, die beim Einrasten von Abdeck- (12) und Grundplatte (11) in den Randgurt eindringen.

12. Vorrichtung nach einem der Ansprüche 1 bis 11, die für jede Ecke des Haltenetzes ein Befestigungsmittel (2) und zumindest für die Unterseite des Haltenetzes zumindest ein Befestigungsmittel (1) aufweist, das zwischen den beiden Ecken an der Unterseite des Haltenetzes angeordnet ist.
